Europäisches Patentamt

**European Patent Office**

**Office européen des brevets**

(19)

(11) Numéro de publication : **0 003 478**
**B1**

(12) **FASCICULE DE BREVET EUROPÉEN**

(45) Date de publication du fascicule du brevet : 17.06.81

(21) Numéro de dépôt : **78101776.9**

(22) Date de dépôt : **20.12.78**

(51) Int. Cl.³ : **F 24 J   3/02**

(54) **Capteur solaire.**

(30) Priorité : **10.01.78 CH 210/78**

(43) Date de publication de la demande : **22.08.79 (Bulletin 79/17)**

(45) Mention de la délivrance du brevet : **17.06.81 Bulletin 81/24**

(84) Etats contractants désignés : **BE DE FR GB IT LU NL SE**

(56) Documents cités :
**FR - A - 1 432 172**
**FR - A - 2 334 067**
**FR - A - 2 385 930**
**US - A - 4 048 981**

(73) Titulaire : **ENER-NAT SA**
**Rue du Midi**
**CH-1880 Bex (CH)**

(72) Inventeur : **Kohli, Benjamin**
**Rue du Midi**
**CH-1880 Bex (CH)**

(74) Mandataire : **Nithardt, Roland**

**CH-1441 Valeyres-sous-Montagny (CH)**

Imprimerie Jouve, 17, rue du Louvre, 75001 Paris, France

EP 0 003 478 B1

## Capteur solaire

La présente invention concerne un capteur solaire comportant un cadre rigide et au moins une feuille en matière synthétique transparente aux rayons solaires, tendue sur le cadre, ce cadre étant réalisé au moyen d'un profilé rigide qui se présente sous la forme générale d'une bande plane qui comporte au moins une gorge latérale en forme de U, dont les branches latérales sont perpendiculaires au plan de la bande, et dont le fond est constitué par une partie de cette bande, les branches latérales présentant un resserrement l'une vers l'autre à proximité de leurs extrémités libres afin de définir un étranglement, cet étranglement étant destiné à coopérer avec un dispositif de verrouillage permettant d'assurer la tension de la feuille et sa fixation en position.

On connaît déjà des capteurs solaires tels que ceux décrits par le brevet suisse n° 610 091, constitués par un boîtier recouvert par une plaque transparente simple ou double et dans lequel circule un liquide utilisé pour véhiculer les calories piégées. Les plaques transparentes sont souvent des vitres en verre ordinaire et présentent l'inconvénient d'être extrêmement lourdes. De ce fait, ils nécessitent des supports spéciaux et en particulier lorsqu'ils sont destinés à être posés sur le toit d'une maison, la charpente doit être suffisamment résistante pour supporter des charges importantes.

Pour éviter ces inconvénients, on a réalisé des capteurs solaires recouverts d'une feuille en matière synthétique transparente aux rayons infra-rouges, qui est tendue sur un cadre de préférence en alliage léger. Toutefois, les profilés existants se prêtent mal à ce montage et les fabricants sont amenés à utiliser des artifices compliqués pour assurer la tension de la feuille sur son support.

Le brevet français n° 2' 334' 067 décrit un capteur solaire dans lequel l'organe transparent est constitué par un film en matière synthétique, qui est fixé sur un cadre rigide par l'intermédiaire d'éléments de blocage comportant une gorge en U dans laquelle s'encastre un profil en U retourné. Ce dispositif remplit une seule fonction qui consiste à retenir l'extrémité du film. De ce fait les inconvénients qui apparaissent à l'homme de l'art sont les suivants :

Le profil de blocage doit être engagé de force par l'avant, c'est-à-dire du côté ouvert du U qui est ménagé dans le cadre support. Au cours de cette introduction, aucun moyen n'est prévu pour retenir le film souple en position. D'autre part le profil de blocage est agencé pour assurer le verrouillage en position du film préalablement tendu par l'opérateur, ce film devant être maintenu, en apparence manuellement, en tension pendant la mise en place du profil. En outre le blocage en position du film dépend de la précision de l'ajustage des deux éléments destinés à coopérer pour remplir cette fonction, ce qui implique une fabrication relativement coûteuse.

Le brevet français n° 1' 432' 172 décrit un moyen pour fixer une feuille en matière synthétique souple dans une gorge en U resserrée à son ouverture, par blocage d'une surépaisseur à l'intérieur de la gorge en U. La surépaisseur est créée par l'introduction d'une corde et d'un câble dans un ourlet réalisé à l'extrémité de la feuille. Cette surépaisseur peut éventuellement être bloquée par une pièce complémentaire également introduite dans la gorge en U.

Ce dispositif de blocage n'assure qu'une fonction statique consistant à retenir la feuille et ne permet en aucun cas d'exercer une traction dynamique sur les bords de la feuille en vue d'assurer sa tension sur un cadre. En plus, ce mode de fixation implique la confection préalable d'un ourlet, et la tension de la feuille dépend exclusivement de la position inchangeable de cet ourlet. Ce moyen est par conséquent impropre à la fixation d'une feuille transparente sur un cadre rigide de dimensions déterminées.

La présente invention se propose de remédier à ces inconvénients en réalisant un capteur solaire conçu sur la base d'un profilé nouveau en alliage léger, grâce auquel le montage d'une ou plusieurs feuilles en matière synthétique transparente se trouve simplifié. Ce profilé comporte également un dispositif de verrouillage qui garantit la tension uniforme de la feuille même après une durée d'utilisation relativement longue.

Dans ce but, le capteur solaire susmentionné est caractérisé en ce que ledit dispositif de verrouillage comprend une première tige rigide et une seconde tige rigide, ladite première tige comportant deux gorges concaves symétriques l'une de l'autre et disposées de part et d'autre de cette tige, et ladite seconde tige, de forme cylindrique ou de section carrée à angles arrondis, étant disposée en regard de la première tige, la feuille passant au moins partiellement autour d'une des tiges et étant pincée d'une part entre les deux tiges agencées de telle manière que le profil convexe de la seconde tige pénètre au moins partiellement dans une gorge concave de la première tige, et d'autre part entre une des tiges et l'extrémité libre de la branche adjacente de la gorge latérale en forme de U, le profil de l'autre gorge concave de la première tige et le profil convexe de la seconde tige ayant des formes et des dimensions adaptées à la forme et aux dimensions de la gorge latérale en forme de U et de ses extrémités libres qui sont recourbées vers l'intérieur de cette gorge.

Une forme de réalisation du capteur solaire selon l'invention est décrite ci-dessous en référence aux dessins annexés dans lesquels :

La figure 1 est une vue en coupe transversale du profilé en alliage léger servant à fabriquer le cadre du capteur,

La figure 2 est une vue agrandie d'une forme de réalisation du dispositif de verrouillage assurant la fixation des feuilles en matière synthétique transparente,

La figure 3 illustre une autre forme de réalisation du dispositif de verrouillage équipé d'un dispositif de blocage en position verrouillée,

La figure 4 représente une autre forme de réalisation du dispositif de verrouillage équipé d'un autre dispositif assurant le blocage en position verrouillée,

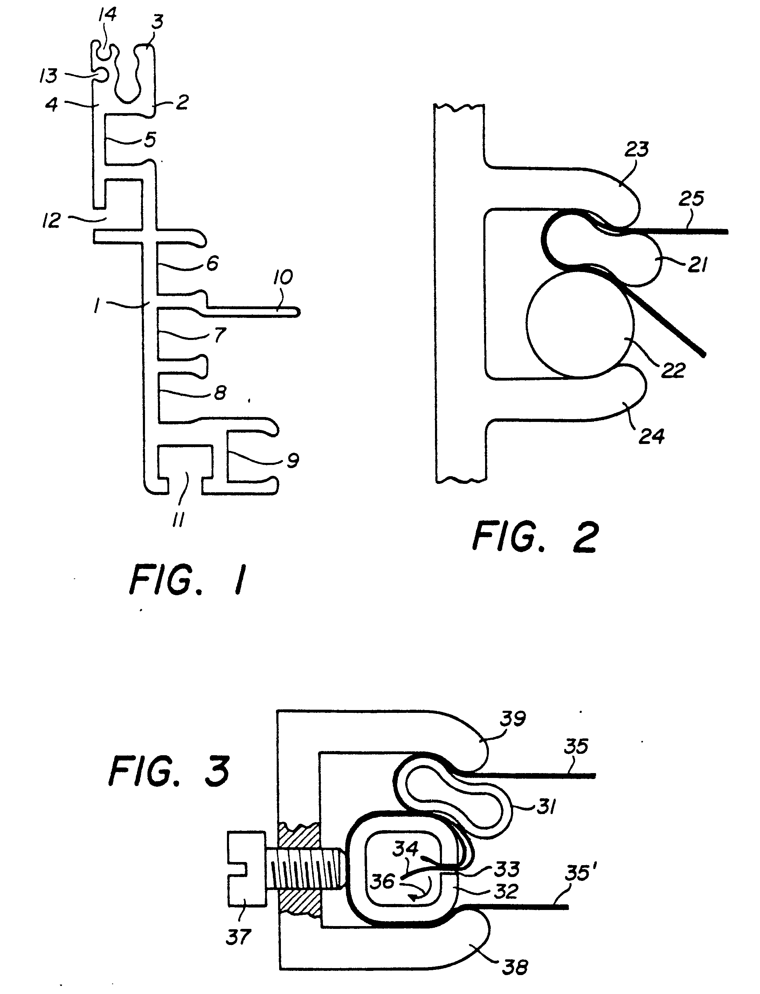

En référence à la figure 1, le profilé en alliage léger, servant à la confection du cadre sur lequel sont montés les différents éléments du capteur servant à récupérer l'énergie solaire, se présente sous la forme d'une bande plane 1 qui se termine à son extrémité supérieure par une partie 2 ayant la forme générale d'un U dont les branches libres 3 et 4 sont au moins approximativement parallèles au plan de la bande 1. Par ailleurs, ce profilé comporte, sur sa face intérieure, un certain nombre de gorges latérales en forme de U (5, 6, 7, 8 et 9) dont les branches libres sont au moins approximativement perpendiculaires au plan de la bande 1. Ces gorges latérales en forme de U ont toutes les mêmes dimensions et comportent, à leurs extrémités ouvertes, un étranglement dont le rôle sera expliqué en référence aux figures 2, 3 et 4. La branche latérale inférieure de la gorge latérale 6 en forme de U se prolonge par un plateau 10 qui est par exemple destiné à supporter une plaque d'aluminium ou de cuivre noircie, destinée à absorber l'énergie solaire pour la transmettre à un circuit de refroidissement pouvant être constitué par un enroulement de tubes étroitement liés à cette plaque. Ces éléments connus en soi ne sont pas représentés. Le bord inférieur du profilé se termine par une autre ouverture 11 en forme de U, qui est prévue pour remettre le montage du cadre de ce capteur solaire sur un rail aux formes et aux dimensions appropriées. Enfin, la face extérieure du profilé comporte plusieurs ouvertures 12, 13 et 14 pour le montage de différents joints et d'une agrafe servant de couvre-joint entre deux capteurs solaires juxtaposés.

Les gorges latérales en forme de U, dont les branches latérales sont perpendiculaires au plan du profilé, coopèrent avec une première tige 21 et une seconde tige 22 représentées par la figure 2, et qui sont introduites entre les branches latérales sensiblement parallèles 23 et 24 desdites gorges latérales en forme de U. Comme le montre cette vue agrandie, les branches latérales 23 et 24 sont légèrement recourbées vers l'intérieur à leurs extrémités, de telle façon qu'elles forment un étranglement au niveau de l'ouverture de la gorge latérale en forme de U, la distance séparant les branches latérales 23 et 24 à leurs extrémités libres étant inférieure à la distance qui les sépare à leur base. La première tige 21 comporte elle-même un étranglement au voisinage de son axe longitudinal, qui est prolongé par deux parties cylindriques disposées de part et d'autre de l'étranglement. Cet étranglement est défini par deux gorges concaves disposées symétriquement de part et d'autre de la tige. Les gorges concaves de la première tige 21 ont une forme qui correspond approximativement à l'extrémité libre recourbée de la branche latérale 23 de la gorge latérale en forme de U. La seconde tige 22 est de forme cylindrique. Les deux tiges sont dimensionnées de telle façon qu'elles coopèrent pour bloquer l'ouverture de la gorge latérale en forme de U, lorsque l'une d'elles est tirée ou poussée en direction de cette ouverture. Ce dispositif de verrouillage permet de fixer et de tendre une feuille, par exemple une feuille en matière synthétique transparente aux rayons du soleil. Ce dispositif opère de la façon suivante : une feuille 25 est passée entre l'extrémité libre de la branche latérale 23 de la gorge en forme de U et la gorge concave située en face de la première tige 21. Cette feuille 25 entoure ensuite la partie semi-cylindrique arrière de la première tige et passe entre l'autre gorge concave de la première tige 22 et par-dessus la partie de la surface latérale de ladite seconde tige cylindrique 22 située en face de cette autre gorge concave. Lorsque la feuille 25 est mise en place et tendue sur son cadre, la tension intrinsèque de cette feuille sollicite la tige 21 vers l'ouverture de la gorge latérale en forme de U et, par frottement, entraîne la seconde tige 22 dans cette même direction. Mais comme la somme du diamètre de la tige 22 et de la section de l'étranglement de la tige 21 est supérieure à la distance qui sépare les extrémités libres des branches latérales 23 et 24 de la gorge latérale en forme de U, il résulte un blocage au niveau de l'ouverture de cette gorge, entraînant le verrouillage en position de la feuille 25.

Dans cette forme de réalisation, les tiges 21 et 22 sont toutes deux des tiges pleines, la tige 21 étant de préférence obtenue par écrasement d'une pièce cylindrique au moyen d'une molleteuse.

En référence à la Fig. 3, les tiges 31 et 32 sont des tubes creux, la tige 32 ayant une section approximativement carrée, dont les angles sont arrondis. En outre, dans cette réalisation, la tige 32 présente une fente longitudinale 33 sur un de ses côtés, cette ouverture étant prévue pour recevoir l'extrémité libre 34 d'une feuille transparente 35. Pour tendre cette feuille transparente, il suffit d'introduire son extrémité 34 dans la fente longitudinale 33 de la tige 32 et d'enrouler cette tige dans le sens de la flèche 36, jusqu'à ce que la feuille 35 soit suffisamment tendue.

La feuille 35 peut être remplacée par deux feuilles 35 et 35', dont l'une 35 est disposée comme mentionné ci-dessus et l'autre 35' passe entre la tige 32 et la branche latérale 38 de la gorge latérale en forme de U. Dans ce cas, la première feuille est bloquée d'une part entre la branche latérale 39 de la gorge latérale en forme de U et la tige 31, et d'autre part entre les deux tiges 31 et 32. La seconde feuille sera prise d'une part entre la branche latérale 38 et la tige 32, et d'autre part entre les tiges 31 et 32.

L'ensemble des feuilles 35 et 35' devrait être enroulé autour de la tige 32 et introduit dans l'ouverture 33. Pour augmenter la sécurité à l'emploi et garantir le maintien sous tension de la feuille 35 et 35', on a prévu une ou plusieurs vis de blocage 37, qui repoussent la tige 32 en direction de l'ouverture de la gorge latérale en forme de U et assurent un verrouillage efficace de cette ouverture au moyen des tiges 31 et 32 bloquées par l'étranglement au niveau des extrémités libres des branches latérales 38 et 39.

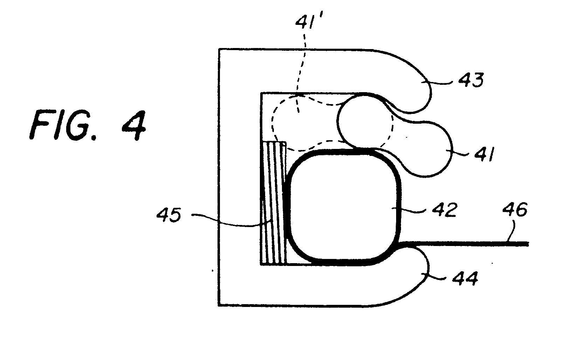

En référence à la fig. 4, les tiges 41 et 42, qui peuvent être pleines ou creuses, assurent le verrouillage de l'ouverture entre les branches latérales 43 et 44 de la gorge latérale en forme de U, grâce à un ressort 45 qui a les mêmes fonctions que la vis de blocage 37 illustrée par la figure 3. Dans cette réalisation, une feuille 46 est enroulée plusieurs fois autour de la tige 42 et reste bloquée entre un angle arrondi de la tige 42 et l'extrémité libre de la branche latérale 44 de la gorge latérale en forme de U.

On a représenté en traits pointillés une position 41' possible de la première tige 41, cette disposition n'étant pas limitée à la réalisation illustrée par cette figure, mais pouvant être reprise dans toutes les autres réalisations décrites.

Les capteurs décrits ci-dessus sont particulièrement avantageux parce qu'ils sont légers et parce que leurs cadres sont spécialement étudiés pour que le montage de différents capteurs en série puisse se faire rapidement, sans outillage spécial, et pour que les liaisons entre capteurs soient étanches et résistantes.

## Revendications

1. Capteur solaire comportant un cadre rigide et au moins une feuille (25, 35, 35', 46) en matière synthétique transparente aux rayons solaires, tendue sur le cadre, ce cadre étant réalisé au moyen d'un profilé rigide qui se présente sous la forme générale d'une bande plane (1) qui comporte au moins une gorge latérale en forme de U (5 à 9), dont les branches latérales (23, 24, 38, 39, 43, 44) sont perpendiculaires au plan de la bande, et dont le fond est constitué par une partie de cette bande, les branches latérales présentant un resserrement l'une vers l'autre à proximité de leurs extrémités libres afin de définir un étranglement, cet étranglement étant destiné à coopérer avec un dispositif de verrouillage permettant d'assurer la tension de la feuille et sa fixation en position, caractérisé en ce que ledit dispositif de verrouillage comprend une première tige rigide (21, 31, 41), et une seconde tige rigide (22, 32, 42), ladite première tige comportant deux gorges concaves symétriques l'une de l'autre et disposées de part et d'autre de cette tige, et ladite seconde tige, de forme cylindrique ou de section carrée à angles arrondis, étant disposée en regard de la première tige, la feuille (25, 35, 35', 46) passant au moins partiellement autour d'une des tiges et étant pincée d'une part entre les deux tiges (21, 22 ; 31, 32 ; 41, 42) agencées de telle manière que le profil convexe de la seconde tige pénètre au moins partiellement dans une gorge concave de la première tige, et d'autre part entre une des tiges et l'extrémité libre de la branche latérale adjacente de la gorge latérale en forme de U, le profil de l'autre gorge concave de la première tige et le profil convexe de la seconde tige ayant des formes et des dimensions adaptées à la forme et aux dimensions de la gorge latérale en forme de U et de ses extrémités libres qui sont recourbées vers l'intérieur de cette gorge.

2. Capteur solaire selon la revendication 1, caractérisé en ce que la seconde tige (32) est creuse et comporte, le long d'un de ses côtés, une fente longitudinale (33), parallèle à son axe, agencée pour permettre l'introduction de l'extrémité (34) de la feuille (35), afin d'assurer la tension de cette dernière par rotation de cette tige autour de son axe.

3. Capteur solaire selon la revendication 1, caractérisé en ce que le profilé rigide comporte au moins un alésage fileté, agencé pour permettre la mise en place d'une vis de blocage agissant sur ladite seconde tige.

4. Capteur solaire selon la revendication 1, caractérisé en ce que la gorge latérale en forme de U contient au moins un ressort de poussée, agencé pour solliciter ladite seconde tige en direction de l'ouverture de cette gorge.

5. Capteur solaire selon l'une quelconque des revendications précédentes, caractérisé en ce que le profilé comporte plusieurs gorges latérales en forme de U, parallèles entre elles, chacune étant équipée d'une première et d'une seconde tiges rigides, agencées pour permettre la mise en place de plusieurs films transparents tendus à distance prédéterminée, les uns parallèlement aux autres.

## Claims

1. A sunray captor comprising a rigid framework and at least one sheet (25, 35, 35', 46) of synthetic material transparent to sunrays, stretched over the frame, this frame being made by means of a rigid profile which has the general form of a flat strip (1) which comprises at least one lateral U-shaped groove (15-9), whose lateral arms (23, 24, 38, 39, 43, 44) are perpendicular to the plane of the strip, and the bottom of which is constituted by a part of this strip, the lateral arms narrowing down towards each other near their free ends in order to define a waist portion, this waist portion being intended to cooperate with a locking device thus ensuring the tightness of the sheet and its fixing into position, characterized in that the said locking device includes a first rigid rod (21, 31, 41) and a second rigid rod (22, 32, 42) the said first rod comprising two concave symmetrical grooves and placed on both sides of this rod and the said second rod, cylindrical or square cross-section, with rounded corners, being placed opposite the first rod, the sheet (25, 35, 35', 46) passing at least partially around one of the rods and being gripped on the one hand between the two rods (21, 22 ; 31, 32 ; 41, 42) adapted in such a way that the convex profile of the second rod penetrates at least partially in a concave groove of the first rod, and on the other hand between one of the rods and the free end of the lateral arm adjacent to the lateral U-shaped groove, the profile of the other concave groove of the first rod and the convex profile of the second rod having forms and dimensions adapted to the form and the dimensions of the U-shaped lateral groove and its free ends which are curved towards the inside of this groove.

2. Sunray captor according to claim 1, characterized in that the second rod (32) is hollow and comprises, along one of its sides an elongated slot (33), parallel to its axis, adapted in order to allow the insertion of the end (34) of the sheet (35), in order to ensure the tightness of the latter by rotation of this rod around its axis.

3. Sunray captor according to claim 1, characterized in that the rigid profile comprises at least one threaded bore hole, adapted to allow the positioning of a locking screw acting on the said second rod.

4. Sunray captor according to claim 1, characterized in that the lateral U-shaped groove contains at least one pressure spring adapted to drive the said second rod in the direction of the opening of this groove.

5. Sunray captor according to one of the previous claims, characterized in that the profile comprises several lateral U-shaped grooves, parallel to one another, each one being equipped with a first and a second rigid rod, adapted to allow the positioning of several transparent films stretched at a predetermined distance parallel to each other.

### Ansprüche

1. Sonnenkollektor mit einem steifen Rahmen und wenigstens einer sonnenstrahlendurchlässigen Kunststoffolie (25, 35, 35', 46), die entlang des Rahmens eingespannt ist, wobei der Rahmen aus einem verwindungsfesten Profilteil gebildet ist, der im allgemeinen die Form einer ebenen Leiste (1) aufweist, mit wenigstens einer seitlichen U-förmigen Nut (5 bis 9), deren Seitenarme (23, 24, 38, 39, 43, 44) senkrecht zur Leistenebene angeordnet sind und deren Boden von der Leiste begrenzt wird, wobei die Seitenarme in der Nähe ihrer freien Ende zueinander hingebogen sind um so eine Verengung zu bilden, die mit einer Verriegelungsvorrichtung zusammenwirkt um die Folie zu halten und zu spannen, dadurch gekennzeichnet, daß die Verriegelungsvorrichtung einen ersten steifen Stab (21, 31, 41) und einen zweiten steifen Stab (22, 32, 42) aufweist, daß der erste Stab zwei symmetrisch zueinander auf zwei sich gegenüberliegenden Seiten angeordnete konkave Nuten aufweist, daß der zweite zylindrische oder rechteckige und mit abgerundeten Kanten versehene Stab neben dem ersten Stab angeordnet ist, daß die Folie (25, 35, 35', 46) wenigstens teilweise um einen der Stäbe verläuft und einerseits zwischen den beiden Stäben (21, 22, 31, 32, 41, 42) festklemmbar ist aufgrund des wenigstens teilweisen Eingreifens des konvexen Teils des zweiten Stabes in die konkave Nut des ersten Stabes und andererseits zwischen einem der Stäbe und dem freien Ende des der seitlichen U-förmigen Nut benachbarten Seitenarmes festklemmbar ist, und daß das Profil der anderen konkaven Nut des ersten Stabes und das konvexe Profil des zweiten Stabes in die Gestalt und die Abmessungen der seitlichen U-förmigen Nut und ihrer freien nach innen gebogenen Enden angepaßt sind.

2. Sonnenkollektor nach Anspruch 1, dadurch gekennzeichnet, daß der zweite Stab (32) hohl ist und entlang einer seiner Seiten einen zur Achse parallelen Längsschlitz (33) aufweist zur Aufnahme des Endes (34) der Folie (35) um so deren Spannung mittels Rotation des Stabes um seine Achse zu gewährleisten.

3. Sonnenkollektor nach Anspruch 1, dadurch gekennzeichnet, daß das steife Profil wenigstens eine Gewindebohrung aufweist zur Aufnahme einer auf den zweiten Stab wirkenden Feststellschraube.

4. Sonnenkollektor nach Anspruch 1, dadurch gekennzeichnet, daß die seitliche U-förmige Nut wenigstens eine Klemmfeder aufweist, die den zweiten Stab in Richtung der Nutöffnung drückt.

5. Sonnenkollektor nach einem der vorhergehenden Ansprüche, dadurch gekennzeichnet, daß das Profilteil mehrere parallel zueinander verlaufende seitliche U-förmige Nuten aufweist, deren jede mit einem ersten und einem zweiten steifen Stab versehen sind zur Aufnahme mehrerer gespannter sonnenstrahlendurchlässiger Folien im parallelen Abstand voneinander.

FIG. 1

FIG. 2

FIG. 3

1

2/2

FIG. 4